Europäisches Patentamt

European Patent Office

Office européen des brevets

(19)

(11) **EP 0 713 637 B1**

(12) **EUROPEAN PATENT SPECIFICATION**

(45) Date of publication and mention
of the grant of the patent:
**20.12.2000   Bulletin 2000/51**

(51) Int Cl.$^7$: **A01B 63/112**, G01L 5/13

(21) Application number: **95203063.3**

(22) Date of filing: **10.11.1995**

(54) **Draft force sensor apparatus**

Zugkraftsensorgerät

Appareil pour capter un effort de traction

(84) Designated Contracting States:
**DE FR GB IT**

(30) Priority: **24.11.1994   EP 94830547**

(43) Date of publication of application:
**29.05.1996   Bulletin 1996/22**

(73) Proprietor: **NEW HOLLAND ITALIA S.p.A.**
**I-41100 Modena (IT)**

(72) Inventors:
 • **Sedoni, Carlo**
 **I-41100 Modena (IT)**

 • **Cevolini, Alfredo**
 **I-41100 Modena (IT)**

(74) Representative: **Vandenbroucke, Alberic**
 **New Holland Belgium NV.**
 **Patent Department**
 **Leon Claeysstraat, 3A**
 **8210 Zedelgem (BE)**

(56) References cited:
 **EP-A- 0 088 915**       **EP-A- 0 376 093**
 **EP-A- 0 432 548**       **DE-A- 3 515 126**
 **FR-A- 2 225 738**

Printed by Jouve, 75001 PARIS (FR)

**Description**

The present invention relates generally to an agricultural machine having a draft force sensor apparatus for an implement towed behind an agricultural machine, such as a tractor, which forms part of the tractor draft control system.

Devices of this general type are known which allow the height of the implement to be automatically controlled on the basis of the draft force detected in the connection between the implement and the agricultural machine. The power applied by the agricultural machine to draw the implement is thereby regulated to a desired value.

Certain embodiments of such devices have a flexure bar mounted on the agricultural machine, at least one connection arm between the flexure bar and the implement to apply the draft force for towing the implement, a positioning member for raising and lowering the implement and an electrical processing circuit for controlling the positioning member by way of a control which is usually of the hydraulic type. Under the action of the force applied by the implement in use, the flexure bar deforms and means are provided to detect the deformation of the bar and to apply a signal to the processing circuit. The signal indicates to the processing circuit the size of the draft force being applied to the implement through the flexure bar.

It is important that the means to sense the flexure of the flexure bar should be capable of providing an accurate indication of the relatively small deflections of the flexure bar under load, be capable of manufacture at an acceptable cost, and remain serviceable despite the arduous operating conditions that are to be found in agricultural machines. In the prior art it has been proposed to use a variety of sensor systems including electrical resistance strain gauges, such as depicted in EP-A-0.432.548, and hydromechanical transformer control circuits, such as exemplified in EP-B-0.088.915, but each of the prior systems suffers from one or more defects in regard to cost, a low signal to noise ratio thereby necessitating an electronic amplifier, sensitivity to oil temperature and difficulty of manufacture or installation.

In EP-B-0.376.093 some of the above drawbacks have been attenuated by providing a flexure bar in which a cantilevered sensor pin is operable to deflect together with the flexure bar upon the creation of external forces thereon. The sensor pin carries a Hall Effect sensor for sensing variations in a magnetic field which are proportional to the forces experienced on the flexure bar. However, as the sensor pin is connected to the flexure bar at the point of introduction of the external forces, it is prone to vibrations resulting from implement movements. It furthermore presents difficulties to electrically connect the Hall Effect sensor to a control circuit considering that the Hall Effect sensor moves relative to the chassis of the vehicle. The introduction of the wiring moreover has to occur at the outer end of the flexure bar which is a hostile environment as it is exposed to dirt and humidity.

It is therefore the objective of the present invention to overcome the above mentioned disadvantages of prior art arrangements by providing a draft force sensor apparatus which is durable in construction, inexpensive of manufacture, carefree of maintenance, facile in assemblage and simple and effective in use.

According to the present invention, an agricultural machine having a draft force sensor apparatus for an implement towed behind an agricultural machine is provided, comprising :

- a flexure bar mounted on the chassis of the agricultural machine;
- at least one connection arm between the implement and the flexure bar;
- a control system including a member for raising and lowering the implement;
- an electrical processing circuit for controlling the said member and including a Hall Effect sensor to detect movement of the flexure bar relative to the chassis as a result of tractive or pressure forces on the implement causing deflections of the flexure bar; and
- a sensor pin housed within the flexure bar and comprising a first end portion free standing therefrom.

The arrangement is characterized in that :

- the sensor pin further comprises a second end portion immovably fixed relative to the chassis; the arrangement being such that relative movement is allowed between said flexure bar and said first end portion upon deflection of said flexure bar; and
- said Hall Effect sensor is disposed at said first end portion of the sensor pin to detect movement of the flexure bar relative to said first end portion and to generate an output signal proportional to the forces experienced on the flexure bar.

A draft force sensor apparatus in accordance with the present invention will now be described in greater detail, by way of example, with reference to the accompanying drawings, in which:

Figure 1 is a perspective view of the rear portion of a tractor incorporating a draft force sensor apparatus according to the present invention;

Figure 2 is a partial sectional view of the draft force sensor apparatus of Figure 1;
Figure 3 is a detailed view of a sensor incorporated into the apparatus of Figure 2;
Figures 4 and 5 show graphs relating to the operation of the apparatus of the preceding Figures; and
Figure 6 is a partial sectional view of an alternative draft sensor apparatus according to the present invention.

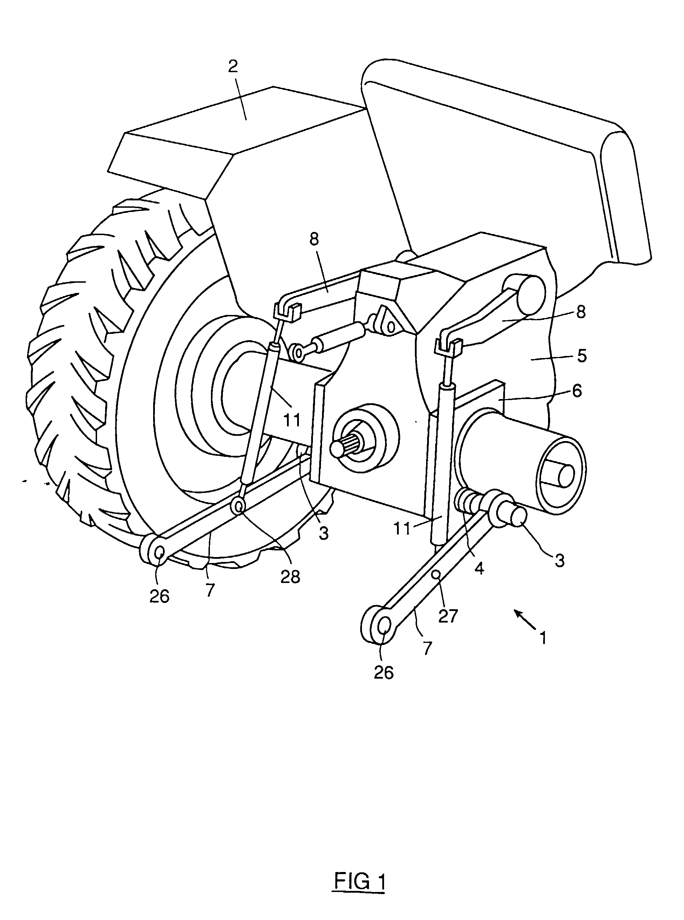

As shown in Figure 1, a device for controlling the attitude of a tool (not shown) adapted to be drawn by an agricultural machine, such as a tractor 2, is generally indicated with the reference numeral 1. The device 1 comprises two cylindrical flexure bars 3 housed within respective hollow cylindrical elements 4 fixed at one end, for example by screws, onto the chassis 5 of the tractor 2. More specifically, the chassis 5 has two parallel side walls 6 from which the elements 4 project coaxially. The flexure bars 3 may be formed together in one piece to constitute a single flexure bar but it is preferred to provide two separate but coaxial bars on respective sides of the tractor chassis 5. The device 1 further is provided with two lower arms 7 for connecting the flexure bars 3 to said tool or implement to be towed by the tractor 2, a control system (not illustrated) operable to control the rotation of two upper arms 8 mounted above the arms 7 about a pivot axis located within the chassis 5 parallel to and above the bars 3 and two connecting levers 11 pivotally connecting the lower arms 7 to the upper arms 8.

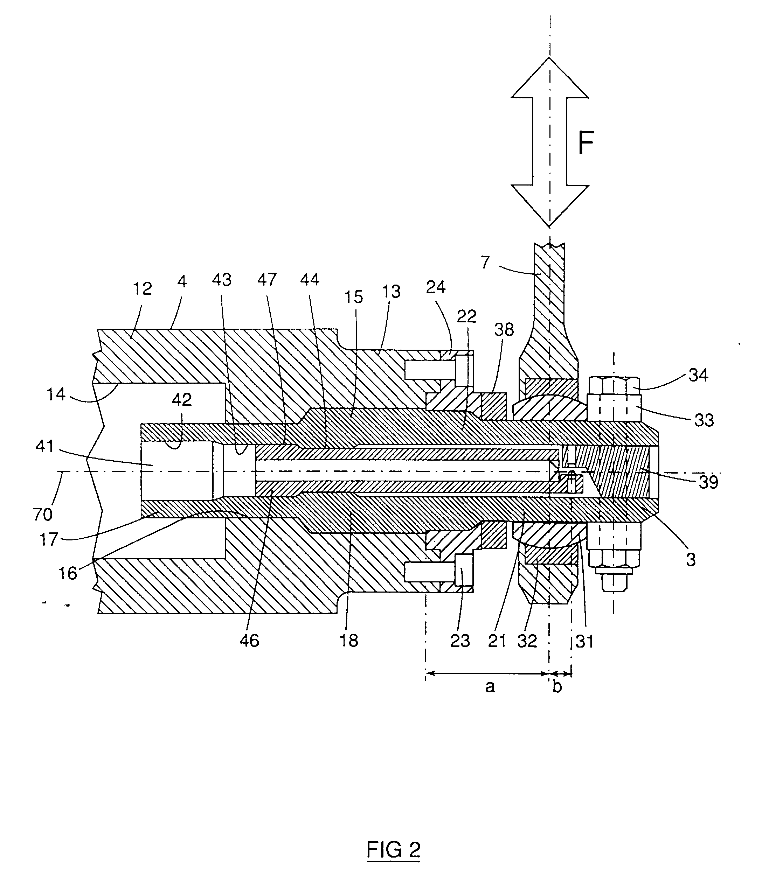

Referring now to Figure 2, one of the elements 4 is shown in cross section and has a central portion 12 projecting from the chassis 5 and an end portion 13 of smaller diameter than that of the central portion 12. The cavity formed within the interior of the element 4 has a section 14 formed in correspondence with the central portion 12, a section 15 of smaller diameter than that of the section 14 and formed in correspondence with the end portion 13, and a section 16 connecting between the sections 14 and 15. The section 16 is formed in correspondence with the end of the central portion 12 connected to the portion 13. Each flexure bar 3 has an end portion 17 housed in cavity sections 14 and 16, a central portion 18 of greater diameter than that of the portion 17 and lodged in the section 15, and an end portion 21 of smaller diameter than the portion 18 and projecting from the element 4. Between the central portion 18 and the end portion 21, the bar 3 has an intermediate portion 22 the diameter of which is intermediate between those of the portions 18 and 21. A cylindrical cover 24 is fixed by screws 23 to the end portion 13 of the element 4. The cover 24 has a central through hole of a diameter slightly greater than the intermediate portion 22 to allow a predetermined clearance for deformation of the flexure bar 3 without obstruction.

It will be appreciated that the provision of the cover 24 and the specific shape of the flexure bar 3 and the element 4 enable the flexure bar 3 to be mounted in an expedient but nonetheless effective and firm manner.

Each lower arm 7 has a through hole 26 for the connection to an implement to be towed and a central through hole 27 on which is pivotally mounted a lower end of the corresponding lever 11. The inner end of each arm 7 is fitted onto the corresponding flexure bar 3 by means of a ball joint 31 and bush 32. A fixing ring 33 forms a shoulder against the ball joint 31 and is held in place by a bolt 34 passing through the portion 21 of the flexure bar 3. A spacer ring 38 is mounted on the end portion of the bar 3 between the ball joint 31 and the cover 24. The direction of the forces transmitted from the implement to the flexure bar 3 are represented by a double-headed arrow F taking account of the occurrence of both pulling and pressing forces.

Each of the flexure bars 3 is hollowed to form an axial cavity 41 extending for the whole length of the bar 3. It will be seen that the cavity 41 has a first section 42 which leads to a second section 43 of smaller diameter. The second section 43 has a region 44 of a further reduced diameter. At the outward end of the portion 21 of the flexure bar 3, the cavity 41 is sealed off from the environment with a plug member 39 which closely fits into said cavity 41 and is pierced by the bolt 34.

Within the axial cavity 41 is mounted a cantilever sensor pin 46 which has a root end 47 fixed securely within the section 43 of the axial cavity and is locked in place within the cavity 41 by means of an abutment member (not shown) inserted in the cavity 41 and shouldering the root end 47 of the pin 46 against the reduced diameter region 44 of the section 43 of the cavity 41. The sensor pin 46 has a reduced diameter to pass through the reduced diameter region 44 and projects in cantilever fashion through section 18 of the flexure bar and into the end portion 21 thereof. As seen in Figure 2, a radial clearance is provided between the portion of the pin 46 extending beyond the narrowed region 44 and the wall of the flexure bar 3. This clearance ensures that the tractive and pressure forces on an implement being towed by the tractor 2 and applied to the flexure bar 3 by way of the connecting arm 7 allows the flexure bar 3 to deflect relative to the free end of the sensor pin 46. The sensor pin is fixed in the flexure bar 3 at a point where the bar 3 is itself held fixedly by the element 4 and therefore the free end of the sensor pin 46 does not move in reaction to the forces that cause deflection of the flexure bar 3.

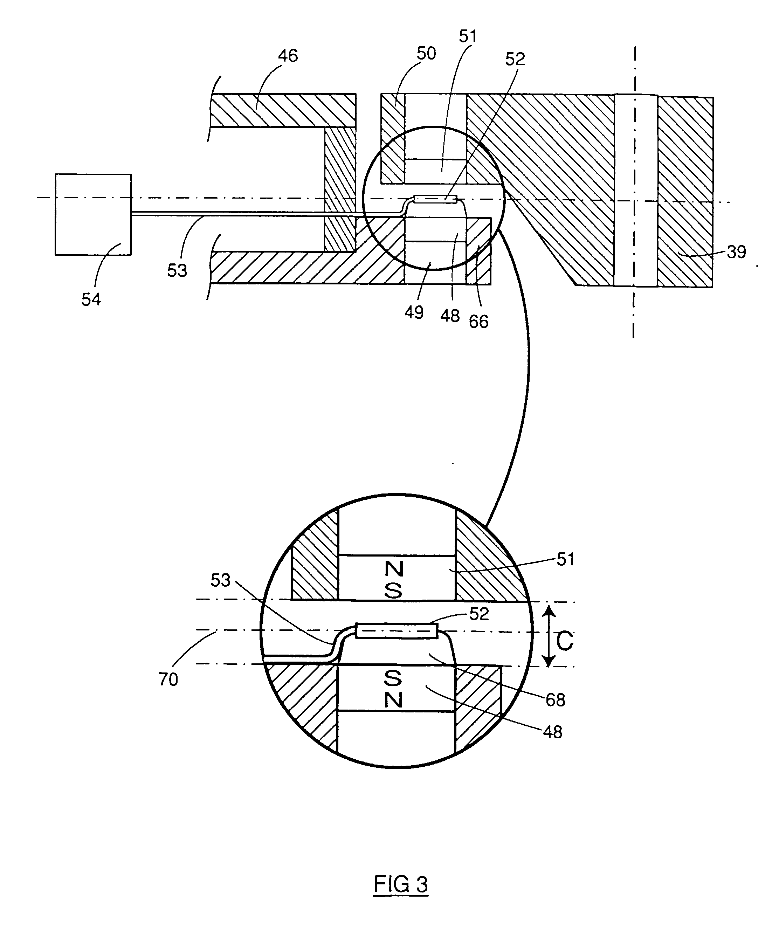

Referring now to Figure 3, the free end of the sensor pin 46 comprises a projecting end portion 66 carrying, at the interior surface thereof, a polarised magnet 48 within a bore 49. The magnet 48 is fixed in position so as to be precisely located, in a predetermined manner, in relation to the end portion 66 of the sensor pin 46. The plug member 39 of the flexure bar 3 has a projection 50 which overlies the bore 49 in the sensor pin 46. The projection 50 carries a further polarised magnet 51 that is registered with the first magnet 48 and disposed so that a gap separates the two magnets 48, 51. The gap has a width C when no forces are exerted on the flexure bar 3. In practice, the width C is chosen in the range of 5 mm. Both the magnet 48 and 51 have a south pole S facing said gap. The magnetic fields of the two magnets 48, 51 are therefore disposed in opposition and cancel each other centrally of the gap.

Mounted on the end portion 66 of the sensor pin 46, a Hall Effect sensor 52 is arranged within the magnet gap. The sensor has signal leads 53 by means of which the Hall Effect voltage in the sensor 52 can be detected. The leads 53 are connected into an electric processing circuit 54, shown schematically in Figure 3, which controls the positioning of the arms 8 to raise and lower the lower arms 7 and thereby position the implement being towed by the tractor 2. The Hall Effect sensor 52 is imbedded in a synthetic or like material, indicated with reference numeral 68, which unaffectedly allows magnetic currents to flow therethrough. The material 68 is secured to the end portion 66 on top of the magnet 48 and the Hall Effect sensor 52 is arranged therein in such a manner that, in the rest position of the sensor pin 46, i.e. when no forces are exerted on the flexure bar 3, the Hall Effect sensor 52 is located perfectly centrally of the gap inbetween the magnets 48 and 51. Consequently, since the magnetic fields cancel each other centrally of the gap, as already mentioned, no output is generated by the Hall Effect sensor 52 when the sensor pin 46 is in the rest position relative to the flexure bar 3.

In a preferred embodiment, the position of the Hall Effect sensor 52 is chosen such that it coincides with the central axis 70 of the sensor pin 46. In other words, in the rest position, both magnets 48 and 41 are equidistantly spaced from said central axis 70.

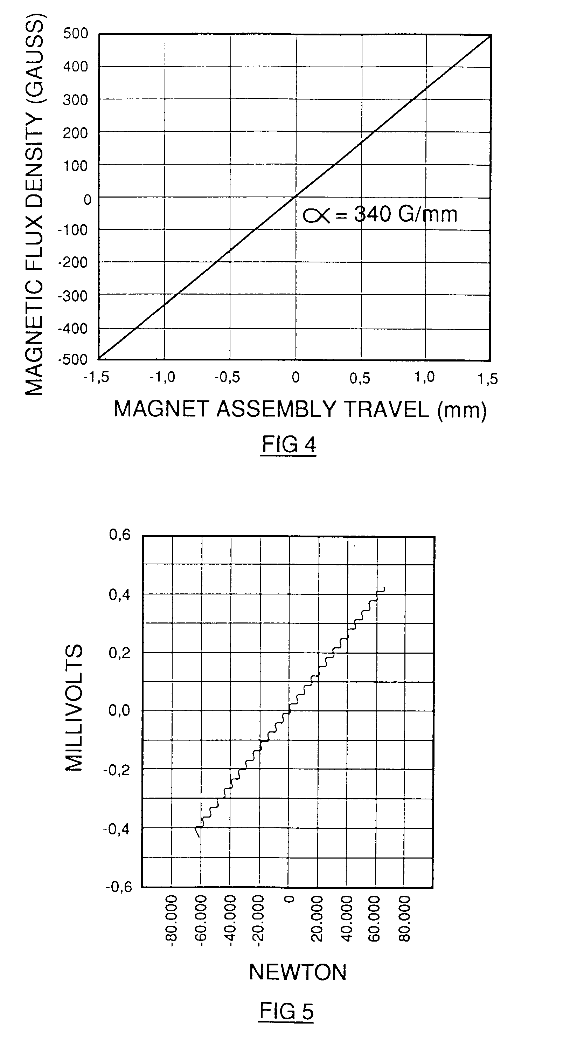

In operation, the draft force exerted by the tractor in towing an implement connected to the lower arms 7 results in a deflection of the flexure bars 3. Within each flexure bar, the end portion 21 deflects so as to carry the polarised magnet 51 into a deflected position whereby the Hall Effect sensor 52 no longer is located centrally of the two magnets 48 and 51 and thus is out of a position in which the magnetic fields of the polarised magnets 48 and 51 cancel one another. Consequently, a resultant magnetic field is detected by the Hall Effect sensor 52. Referring to Figure 4, a graph is shown which relates the magnetic flux density (in Gauss) at the Hall sensor 52 to the travel (in mm) of the magnets 48 and 51 relative to one another. Figure 5 is a graph which relates the draft force applied to the flexure bar 3 to the output voltage from the Hall sensor 52.

It has been found that the sensor arrangement is capable of providing a good signal to noise ratio which does not require a preamplifier to amplify the output signal on the leads 53 before signal processing. Furthermore the sensor arrangement is insensitive to lateral movements, and provides a linear and sufficiently steep relationship between draft force and output voltage. The sensor pin 46 is fixedly secured at the root and does not bend as part of the flexure bar structure so providing a more easily engineered and assembled structure than hitherto with consequent benefits in regard to cost of manufacture and assembly.

Referring to Figure 2, the magnetic flux density T may be calculated approximately by the following formula:

$$T = kFa^2(2a+3b)/6EJ$$

and the output voltage signal $V_{out}$ by the formula :

$$V_{out} = hT$$

wherein :

| | |
|---|---|
| T (Tesla or Gauss) = | magnetic flux density |
| F (N) = | force |
| a (mm) = | distance between the fixation point of the flexure bar 3 and the application point of the force F |
| b (mm) = | distance between the application point of the force F and the centre of the Hall Effect sensor 52 |
| E (N/mm$^2$) = | modulus of elasticity of the flexure bar 3 |
| J (mm$^4$) = | modulus of inertia of the flexure bar 3 at the application point of the force F |
| k, h = | constants |
| $V_{out}$ = | voltage signal |

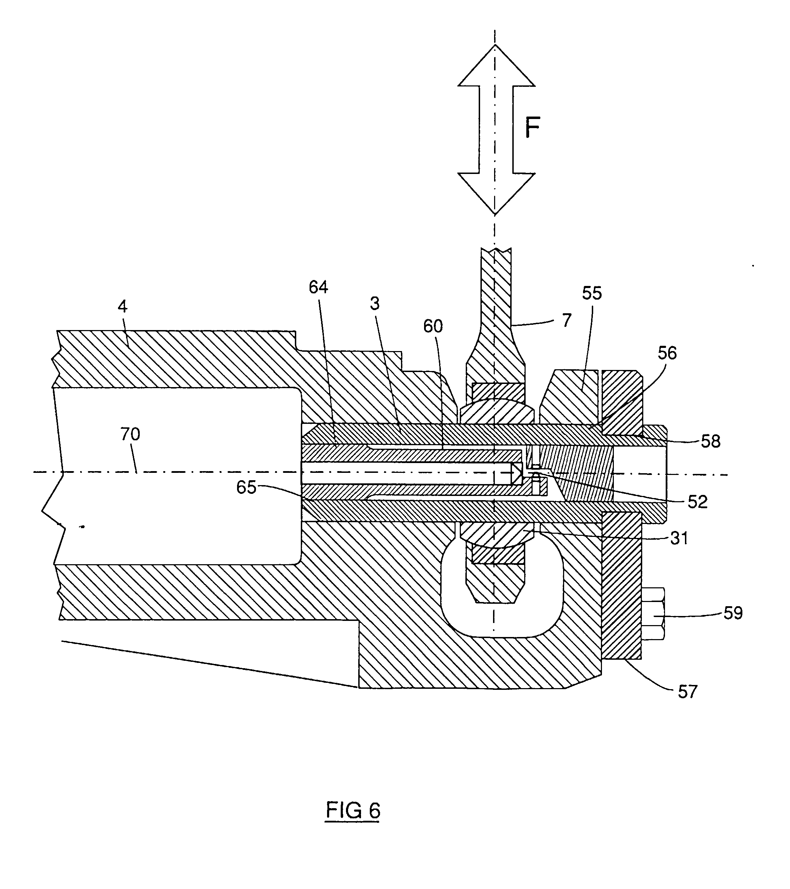

Turning now to Figure 6, a modification of the draft sensor apparatus of the previous Figures is shown. In Figure 6, the element 4 for supporting the flexure bar 3 has been adapted to provide a cavity of uniform diameter to receive the flexure bar 3 and has a yoke portion 55 to receive an outer extension 56 of the flexure bar 3. The ball joint 31 and lower arm 7 are thus disposed between the main body of the element 4 and the yoke portion 55. The flexure bar 3 is fixed to the outer face of the yoke portion 55 by means of a cover 57 which engages a waist 58 of the flexure bar 3 and is itself screwed to the yoke portion 55 by means of a screw 59. In this arrangement, the flexure bar 3 is fixedly secured relative to the element 4 as well in the axial as the radial direction in a simple but highly effective manner. A sensor pin 64 has a root portion which is fixedly secured into a cavity 65 of the flexure bar 3 and is of a diameter to fit the cavity. A projecting portion 60 of the sensor pin is of reduced diameter to give the required clearance between the pin and the flexure bar 3 which allows the flexure bar 3 to deflect relative to the sensor pin 64. The Hall Effect sensor 52 is disposed at the tip of the sensor pin 64 in the same general arrangement as previously described with reference to Figures 1 to 5. It will be appreciated that the embodiment of Figure 6 operates in a comparable manner as the arrangement of Figures 1 to 5 i.e. forces F on the flexure bar 3 cause the same to deflect relative to the stationary sensor pin 64 whereby the amount of deflection, and hence the magnitude of the force F, is detected by the Hall Effect sensor 52.

## Claims

1. An agricultural machine having a draft force sensor apparatus for an implement towed behind an agricultural machine (2), comprising :

   - a flexure bar (3) mounted on the chassis (5) of the agricultural machine;
   - at least one connection arm (7) for connecting the implement and the flexure bar (3);
   - a control system including a member (8) for raising and lowering the implement;
   - an electrical processing circuit (53) for controlling the said member (8) and including a Hall Effect sensor (52) to detect movement of the flexure bar (3) relative to the chassis (5) as a result of tractive or pressure forces on the implement causing deflections of the flexure bar (3); and
   - a sensor pin (46) housed within the flexure bar (3) and comprising a first end portion free standing therefrom; and

     characterized in that :

   - the sensor pin (46) further comprises a second end portion (47) immovably fixed relative to the chassis (5); the arrangement being such that relative movement is allowed between said flexure bar (3) and said first end portion upon deflection of said flexure bar (3); and
   - said Hall Effect sensor (52) is disposed at said first end portion of the sensor pin (46) to detect movement of the flexure bar (3) relative to said first end portion and to generate an output signal proportional to the forces experienced on the flexure bar (3).

2. An agricultural machine having a draft force sensor apparatus according to claim 1 characterized in that the sensor pin (46) is in the form of a cantilever of which the second end portion (47) is housed within an axial cavity (41/ 65) of the flexure bar (3); the second end portion (47) of the sensor pin (46) being arranged in the flexure bar (3) at a position insensitive to the forces exerted on said flexure bar (3).

3. An agricultural machine having a draft force sensor apparatus according to claim 1 or 2 characterized in that the flexure bar (3) is fixedly secured within a fixing element (4) and has an outer portion (21) which projects outwardly from the fixing element (4); the connection arm (7) being coupled to the said outer portion (21) of the flexure arm (3), and the free end of the sensor pin (46) extending into the said outer portion (21) of the flexure arm (3).

4. An agricultural machine having a draft force sensor apparatus according to claim 1 or 2 characterized in that the flexure bar (3) is fixedly secured within a fixing element (4) having a yoke portion (55) to receive an outer extension of the flexure bar (3), the connection arm (7) being coupled to the flexure bar (3) at a central portion thereof between the main body of the fixing element (4) and the yoke portion (55), and the free end of the sensor pin (46) extending into said central portion of the flexure bar (3).

5. An agricultural machine having a draft force sensor apparatus according to any of the preceding claims characterized in that a first polarised magnet (48) is located at the tip of the sensor pin (46) and a second polarised magnet (51) is located on the flexure bar (3) in register with the first polarised magnet (48) to form a magnet gap inbetween; the Hall Effect sensor (52) being disposed in the gap to sense a change in the magnetic field in the gap resulting from a displacement of one polarized magnet relative to the other.

6. An agricultural machine having a draft force sensor apparatus according to claim 5 characterized in that, in the undeflected position of the flexure bar (3), the polarised magnets (48, 51) are equidistantly disposed relative to the Hall Effect sensor (52) whereby the magnetic fields generated by the respective magnets (48, 51) cancel each other at the level of the Hall Effect sensor (52).

7. An agricultural machine having a draft force sensor apparatus according to claims 5 or 6 characterized in that the Hall Effect sensor (52) is fixedly secured relative to the first polarized magnet (48) and coincides with the central, longitudinal axis (70) of the sensor pin (46).

8. An agricultural machine having a draft force sensor apparatus according to any of the claims 5 to 7 characterized in that the second polarized magnet (51) is attached to a plug member (39) sealing off the cavity (41) in the flexure bar (3) from the environment.

9. An agricultural machine having a draft force sensor apparatus according to any of the preceding claims characterized in that connecting electrical leads (53) to the Hall Effect sensor (52) are disposed in a passage running through the sensor pin (46).

10. An agricultural machine having a draft force sensor apparatus according to any of the preceding claims characterized in that the relationship between the output signals of the Hall Effect sensor (52) and the forces exerted on the flexure bar (3) is generally linear.


## Patentansprüche

1. landwirtschaftliche Maschine mit einem Zugkraft-Sensorgerät für ein hinter einer landwirtschaftlichen Maschine (2) geschlepptes Anbaugerät, mit:

   - einem Biegestab (3), der auf dem Fahrgestell (5) der landwirtschaftlichen Maschine befestigt ist,

   - zumindest einem Verbindungsarm (7) zur Verbindung des Anbaugerätes mit dem Biegestab (3),

   - einem Steuersystem, das eine Einrichtung (8) zum Anheben und Absenken des Anbaugerätes einschließt,

   - einer elektrischen Verarbeitungsschaltung (53) zur Steuerung der Einrichtung (8), wobei die elektrische Verarbeitungsschaltung einen Halleffekt-Sensor (52) zur Feststellung einer Bewegung des Biegestabes (3) gegenüber dem Fahrgestell (5) als Ergebnis von Zug- oder Druckkräften auf das Anbaugerät einschließt, die Auslenkungen des Biegestabes (3) hervorrufen, und

   - einen Sensorstift (46), der im Inneren des Biegestabes (3) angeordnet ist und einen gegenüber diesem freistehend angeordneten ersten Endabschnitt aufweist,

     dadurch gekennzeichnet, daß:

   - der Sensorstift (46) weiterhin einen zweiten Endabschnitt (47) aufweist, der gegenüber dem Fahrgestell (5) unbeweglich festgelegt ist, wobei die Anordnung derart ist, daß eine Relativbewegung zwischen dem Biegestab (3) und dem ersten Endabschnitt bei einer Auslenkung des Biegestabes (3) ermöglicht wird, und

   - der Halleffekt-Sensor (52) an dem ersten Endabschnitt des Sensorstiftes (46) angeordnet ist, um eine Bewegung des Biegestabes (3) gegenüber dem ersten Endabschnitt festzustellen und ein Ausgangssignal zu erzeugen, das proportional zu den auf den Biegestab (3) einwirkenden Kräften ist.

2. Landwirtschaftliche Maschine mit einem Zugkraft-Sensorgerät nach Anspruch 1, dadurch gekennzeichnet, daß der Sensorstift (46) die Form eines freitragenden Elementes aufweist, dessen zweiter Endabschnitt (7) im Inneren eines axialen Hohlraumes (41/65) des Biegestabes (3) untergebracht ist, wobei der zweite Endabschnitt des Sensorstiftes (46) in dem Biegestab (3) an einer Position angeordnet ist, die gegenüber den auf den Biegestab (3) ausgeübten Kräften unempfindlich ist.

3. Landwirtschaftliche Maschine mit einem Zugkraft-Sensorgerät nach Anspruch 1 oder 2, dadurch gekennzeichnet, daß der Biegestab (3) fest in einem Befestigungselement (4) festgelegt ist und einen äußeren Abschnitt (21) aufweist, der von dem Befestigungselement (4) nach außen hin vorspringt, wobei der Verbindungsarm (7) mit dem äußeren Abschnitt (21) des Biegestabes (3) verbunden ist und das freie Ende des Sensorstiftes (46) sich in den äußeren Abschnitt (21) des Biegearms (3) erstreckt.

4.  Landwirtschaftliche Maschine mit einem Zugkraft-Sensorgerät nach Anspruch 1 oder 2, dadurch gekennzeichnet, daß der Biegestab (3) fest in einem Befestigungselement (4) befestigt ist, das einen Jochabschnitt (55) zur Aufnahme einer äußeren Verlängerung des Biegestabes (3) aufweist, wobei der Verbindungsarm (7) mit dem Biegestab (3) an einem Mittelabschnitt hiervon zwischen dem Hauptkörper des Befestigungselementes (4) und dem Jochabschnitt (55) gekoppelt ist und wobei das freie Ende des Sensorstiftes (46) sich in den Mittelabschnitt des Biegestabes (3) erstreckt.

5.  Landwirtschaftliche Maschine mit einem Zugkraft-Sensorgerät nach einem der vorhergehenden Ansprüche, dadurch gekennzeichnet, daß ein erster polarisierter Magnet (48) an der Spitze des Sensorstiftes (46) angeordnet ist, daß ein zweiter polarisierter Magnet (51) auf dem Biegestab (3) in Ausrichtung mit dem ersten polarisierten Magneten (48) angeordnet ist, um zwischen diesen einen Magnetspalt zu bilden, und daß der Halleffekt-Sensor (52) in dem Spalt angeordnet ist, um eine Änderung des Magnetfeldes in dem Spalt zu messen, die sich aus einer Bewegung eines polarisierten Magneten relativ zum anderen ergibt.

6.  Landwirtschaftliche Maschine mit einem Zugkraft-Sensorgerät nach Anspruch 5, dadurch gekennzeichnet, daß in der unausgelenkten Position des Biegestabes (3) die polarisierten Magnete (48, 51) unter gleichen Abständen gegenüber dem Halleffekt-Sensor (52) angeordnet sind, so daß die von den jeweiligen Magneten (48, 51) erzeugten Magnetfelder einander in der Ebene des Halleffekt-Sensors (52) aufheben.

7.  Landwirtschaftliche Maschine mit einem Zugkraft-Sensorgerät nach Anspruch 5 oder 6, dadurch gekennzeichnet, daß der Halleffekt-Sensor (52) fest gegenüber dem ersten polarisierten Magneten (48) festgelegt ist und mit der Längsmittelachse (70) des Sensorstiftes (60) zusammenfällt.

8.  Landwirtschaftliche Maschine mit einem Zugkraft-Sensorgerät nach einem der Ansprüche 5-7, dadurch gekennzeichnet, daß der zweite polarisierte Magnet (51) an einem Stopfenelement (39) befestigt ist, das den Hohlraum (41) in dem Biegeelement (3) gegenüber der Umgebung abdichtet.

9.  Landwirtschaftliche Maschine mit einem Zugkraft-Sensorgerät nach einem der vorhergehenden Ansprüche, dadurch gekennzeichnet, daß elektrische Verbindungsleitungen (53) zu dem Halleffekt-Sensor (52) in einem Kanal angeordnet sind, der durch den Sensorstift (46) hindurch verläuft.

10.  Landwirtschaftliche Maschine mit einem Zugkraft-Sensorgerät nach einem der vorhergehenden Ansprüche, dadurch gekennzeichnet, daß die Beziehung zwischen den Ausgangssignalen des Halleffekt-Sensors (52) und den auf den Biegestab (3) einwirkenden Kräften allgemein linear ist.

**Revendications**

1.  Machine agricole possédant un appareil avec détecteur de force de traction pour un outil tracté à l'arrière d'une machine agricole (2), comprenant:

    -   une barre de flexion (3) montée sur le châssis (5) de la machine agricole;
    -   au moins un bras de liaison (7) pour relier l'outil et la barre de flexion (3);
    -   un système de contrôle comprenant un organe (8) destiné à soulever ou à abaisser l'outil;
    -   un circuit électrique de traitement (53) destiné à contrôler ledit organe (8) et comprenant un capteur à effet Hall (52) pour détecter le mouvement de la barre de flexion (3) par rapport au châssis (5), suite à des forces de traction ou de poussée sur l'outil entraînant des déformations de la barre de flexion (3); et
    -   une broche de détection (46) logée dans la barre de flexion (3) et comprenant une première portion d'extrémité libre par rapport à cette dernière; et

    caractérisé en ce que:

    -   la broche de détection (46) comprend en outre une seconde portion d'extrémité (47) fixée de façon immobile par rapport au châssis (5); l'arrangement étant tel qu'un mouvement relatif est permis entre la barre de flexion (3) et ladite première portion d'extrémité lors de la déformation de ladite barre de flexion (3); et

- ledit capteur à effet Hall (52) est disposé sur ladite première portion d'extrémité de la broche de détection (46) afin de détecter le mouvement de la barre de flexion (3) par rapport à ladite première portion d'extrémité, et de générer un signal de sortie proportionnel aux forces exercées sur la barre de flexion (3).

2.  Machine agricole possédant un appareil avec détecteur de force de traction selon la revendication 1, caractérisée en ce que la broche de détection (46) est sous la forme d'une tige en porte-à-faux dont la seconde portion terminale (47) est logée dans une cavité axiale (41/ 65) de la barre de flexion (3); la seconde portion terminale (47) de la broche de détection (46) étant disposée dans la barre de flexion (3) en une position insensible aux forces exercées sur ladite barre de flexion (3).

3.  Machine agricole possédant un appareil avec détecteur de force de traction selon la revendication 1 ou 2, caractérisée en ce que la barre de flexion (3) est fixée fermement dans un élément de fixation (4) et possède une portion terminale (21) en saillie extérieure à partir de l'élément de fixation (4); le bras de liaison (7) étant relié à ladite portion terminale (21) du bras de flexion (3), et l'extrémité libre de la broche de détection (46) se prolongeant à l'intérieur de ladite portion terminale (21) du bras de flexion (3).

4.  Machine agricole possédant un appareil avec détecteur de force de traction selon la revendication 1 ou 2, caractérisée en ce que la barre de flexion (3) est fixée fermement dans un élément de fixation (4) possédant une portion d'étrier (55) afin de recevoir une extension extérieure de la barre de flexion (3), le bras de liaison (7) étant relié à la barre de flexion (3) au niveau d'une portion centrale de cette dernière entre le corps principal de l'élément de fixation (4) et la portion la portion d'étrier (55), et l'extrémité libre de la broche de détection (46) se prolongeant à l'intérieur de ladite portion centrale de la barre de flexion (3).

5.  Machine agricole possédant un appareil avec détecteur de force de traction selon l'une quelconque des revendications précédentes, caractérisée en ce qu'un premier aimant polarisé (48) est positionné au bout de la broche de détection (46) et un second aimant polarisé (51) est positionné sur la barre de flexion (3) en correspondance avec le premier aimant polarisé (48) pour constituer un entrefer d'aimant entre eux; le capteur à effet Hall (52) étant disposé dans l'entrefer afin de détecter une modification du champ magnétique dans l'entrefer suite à un déplacement d'un aimant polarisé par rapport à l'autre.

6.  Machine agricole possédant un appareil avec détecteur de force de traction selon la revendication 5, caractérisée en ce que, dans la position non déviée de la barre de flexion (3), les aimants polarisés (48, 51) sont disposés à équidistance par rapport au capteur à effet Hall (52) de sorte que les champs magnétiques générés par les aimants respectifs (48, 51) se suppriment mutuellement au niveau du capteur à effet Hall (52).

7.  Machine agricole possédant un appareil avec détecteur de force de traction selon la revendication 5 ou 6, caractérisée en ce que le capteur à effet Hall (52) est fixé fermement par rapport au premier aimant polarisé (48) et coïncide avec l'axe central longitudinal (70) de la broche de détection (46).

8.  Machine agricole possédant un appareil avec détecteur de force de traction selon l'une quelconque des revendications 5 à 7, caractérisée en ce que le second aimant polarisé (51) est fixé à un organe de bouchon (39) isolant la cavité (41) dans la barre de flexion (3) par rapport à l'environnement.

9.  Machine agricole possédant un appareil avec détecteur de force de traction selon l'une quelconque des revendications précédentes, caractérisée en ce que les conducteurs électriques de raccordement (53) avec le capteur à effet Hall (52) sont disposés dans un passage traversant la broche de détection (46).

10. Machine agricole possédant un appareil avec détecteur de force de traction selon l'une quelconque des revendications précédentes, caractérisée en ce que la relation entre les signaux de sortie du capteur à effet Hall (52) et les forces exercées sur la barre de flexion (3) est généralement linéaire.

FIG 1

FIG 2

FIG 3

FIG 4

FIG 5

FIG 6